# EUROPEAN PATENT APPLICATION

(11) **EP 1 469 527 A2**
(43) Date of publication of application: **20.10.2004**
(21) Application number: 04008981.5
(22) Date of filing: 15.04.2004
(51) Int. Cl.: H01L 31/042, H01L 31/05

(54) **Solar cell module with power converters**

(30) Priority: 17.04.2003 JP 2003112526
(71) Applicant: CANON KABUSHIKI KAISHA, Ohta-ku, Tokyo (JP)
(72) Inventor: Matsushita, Masaaki, Tokyo (JP); Kataoka, Ichiro, Tokyo (JP); Makita, Hidehisa, Tokyo (JP); Mukai, Takaaki, Tokyo (JP); Itoyama, Shigenori, Tokyo (JP)
(74) Representative: Leson, Thomas Johannes Alois, Dipl.-Ing.

(57) **Abstract**

Provided is a solar cell module with power converters, including a plurality of solar cells, a covering member, and a plurality of power converters provided on a surface of the covering member, in which the solar cells form a plurality of solar cell groups comprising two or more solar cells electrically connected to each other with a gap therebetween via an interconnector, each of the power converters is arranged out of an extension line of the gap, each power converter is connected to an output of one solar cell group, and outputs of the respective power converters are all connected in parallel to each other.

## Description

### BACKGROUND OF THE INVENTION

### Field of the Invention

The present invention relates to a solar cell module with power converters in which power converters for power-converting outputs from solar cells are integrated with a flexible solar cell module having solar cells and a covering member.

### Related Background Art

Conventionally, a number of solar cell modules having flexibility have been known. Japanese Patent Application Laid-Open Nos. H08-114013 and 2001-332752 disclose typical examples thereof, which are formed by connecting solar cells minutely divided on a flexible substrate in series to each other with an interconnector or by a laser scribing technique. A flexible solar cell module has the following advantages.
(I) The flexible solar cell module can be transported in a rolled state upon shipment from a factory. Therefore, the solar cell module is a space-saving module, and the module is rolled up with a light-incident side inside, so that a light-receiving surface is not damaged due to a collision or the like during transportation. This easily ensures the reliability, and makes it easy to transport the solar cell module.
(II) The rolled solar cell module can be placed on a chassis and then unrolled, whereby a solar cell module with a large area can be easily installed. Therefore, operability of the solar cell module is high.
(III) If the module is rolled with the light-receiving surface inside until coming into operation, a solar cell device itself can block light incidence. Therefore, the solar cell can be maintained in a non-electric power generation state until coming into operation. Thus, operational safety is high.

On the other hand, recently, a solar cell module with power converters, in which small power converters for converting the power generated by solar cells called a module integrated converter (MIC) (hereinafter, referred to as a "power converter"), has been expected as a small/medium scale solar power generation system or a power source for emergency.

The solar cell module with power converters has the following advantages.
(I) In the step of connecting solar cells in series, it is necessary that a wiring is routed from the front surface to the back surface of each solar cell, and under this condition, the solar cells are successively connected electrically. The complicated connection process in which the above step is repeated in the number of solar cells connected in series leads to a high cost. On the other hand, if the MIC is used, an IC technique that is advancing dramatically can be used, which enables a mass-production effect, resulting in significant cost reduction.
(II) By incorporating power converters in the solar cell module, power can be converted to an arbitrary voltage output after production'of solar cells. In addition, an AC output can also be taken out, so that various AC loads produced for a general household can be used directly.

As an example of the solar cell module with power converters, Japanese Patent Application Laid-Open Nos. H06-22472 and 2002-111038 disclose typical forms of the solar cells.

The inventors of the present invention have studied about how to realize a flexible solar cell module with power converters having the above-mentioned advantages. However, it has been found that a flexible solar cell module with power converters is hard to produce merely by advancing a conventional solar cell module technique with power converters. More specifically, there arise the following problems.

A solar cell module is assumed in which the back surface reinforcing plate described in Japanese Patent Application Laid-Open No. 2002-111038 is replaced by a flexible sheet. A plurality of solar cells are connected in series with a connecting member in a solar cell module. An output after connection in series is input to the power converters where the DC power generated by solar cells is converted to an AC power to be output. However, according to such a configuration, first, it is necessary to successively connect a number of solar cells in series. This requires routing a wiring from the front surface to the back surface of each solar cell, and to successively connect the solar cells electrically. Thus, such a complicated connection process in which the above step is repeated in the number of solar cells connected in series is required. This impairs the effect of the provision of power converters, and makes it difficult to reduce the cost of a solar cell module in its entirety.

Japanese Patent Application Laid-Open No. H06-22472 describes a configuration in which solar cells are connected in parallel instead of being connected in series, and the voltage is stepped up by power converters. Although this configuration is effective for a small-scale system, another problem arises due to an increase in area of a solar cell module. More specifically, an amount of a current flowing through the wiring is increased along with an increase in an output current caused by an increase in area of a solar cell module, which makes it impossible to ignore a consumed power in the wiring, i.e., a wiring loss. As an ultimate method of solving this problem, one power converter may be connected to one solar cell, and an output is taken, as described in "Single Cell Converter System (SCCS)" (Markus Wuest & Peter Toggweiler, 1994, IEEE). However, to provide one power converter for one solar cell substantially impairs the flexibility. This is because an IC component constituting a power converter is hardly imparted with flexibility. Furthermore, even if a flexible solar cell is used, the solar cell itself is substantially made of a hard material such as silicon, so that the following problem arises. That is, there is a limit to flexibility even if such a solar cell is made thin so as to have flexibility, and it is necessary to roll the solar cell to such a degree that the solar cell withstands a bending stress.

### SUMMARY OF THE INVENTION

The present invention has been made in view of the above circumstances, and has an object to provide a highly flexible solar cell module with power converters at a low cost.

The inventors of the present invention have made extensive studies to achieve the above-mentioned object, and reached the conclusion that the following configuration is the best configuration.

Accordingly, the present invention provides the following.
(I) A solar cell module with power converters, including: a plurality of solar cells; a covering member; and a plurality of power converters provided on a surface of the covering member, in which: the solar cells form a plurality of solar cell groups comprising two or more solar cells electrically connected to each other with a gap therebetween via an interconnector; each of the power converters is arranged out of an extension line of the gap; each power converter is connected to an output of one solar cell group; and outputs of the respective power converters are all connected in parallel to each other.
(II) It is preferable that the plurality of power converters are DC-DC converters that step up a DC voltage output from the solar cells.
(III) It is preferable that a wiring member electrically connecting the outputs of the plurality of power converters is buried in the covering member of the solar cell module.
(IV) It is preferable that the plurality of power converters are placed on a light-incident surface side of the covering member of the solar cell module.
(V) It is preferable that the plurality of power converters are placed on a surface of the covering member outside light-incident surfaces of the solar cells, and placed at a position where a total length of a plurality of wirings connecting inputs of the power converters to the outputs of the solar cell groups is shortest.
(VI) It is preferable that the solar cells have flexibility.
(VII) It is preferable that one electrodes of the solar cells are all connected to form one power source line of the power converters.
(VIII) It is preferable that the solar cells include stacked solar cells having an amorphous microcrystal silicon type three-layer structure.

According to the above item (I), one power converter is provided on a solar cell group basis, the solar cell group being composed of two or more solar cells. Therefore, in a solar cell module with the same output, a gap portion between the solar cells is increased. Furthermore, in this case, the power converter is not provided in an extension line of the gap portion between the solar cells where a bending stress is concentrated, and the power converter is provided out of the extension line, whereby the gap portion can have very high flexibility. Consequently, the bending stress generated when a solar cell module with power converters is rolled can be absorbed by the gap portion. Furthermore, since the number of power converters per module can be decreased, the ratio, at which power converters that a bending stress should not act on, occupy the solar cell module with power converters, is decreased. Therefore, when the solar cell module is rolled, the power converters are unlikely to receive a bending stress, which can enhance the flexibility of the solar cell module with power converters.

According to the above item (II), a DC-DC converter is used, which does not require a large capacitor with a large capacity necessary for conversion to a system frequency and does not require a complicated control system such as a synchronization operation circuit. Therefore, a power converter can be further miniaturized. Consequently, the ratio, at which the power converters occupy the solar cell module with power converters, is decreased, and the flexibility of the solar cell module with power converters can be enhanced.

According to the above item (III), a wiring for connecting outputs of the power converters to each other does not extend to the outside of the power converters. Therefore, the solar cell module with power converters can be rolled easily without entangling the wiring. Furthermore, a wiring connection operation between outputs of the power converters is completed merely by fixing the power converters to a solar cell module. Therefore, there is a merit in that the number of production steps is reduced.

According to the above item (IV), the back surface of the solar cell module with power converters can be made flat. Therefore, the module can be easily fixed to a setting surface with an adhesive or the like. Furthermore, when the solar cell module with power converters is rolled, it is preferable that the module is rolled with light-receiving surfaces of solar cells inside. According to the above item (IV), the power converters come inside the solar cell module with the power converters thus rolled. Therefore, the power converters can be effectively protected from an external force applied upon contact or the like during transportation.

According to the above item (V), even if a solar cell module is enlarged in area, a power loss caused in the wiring of the power converters from the solar cells can be minimized. Thus, a solar cell module with power converters which attains the flexibility and a small power loss can be realized.

According to the above item (VI), if a solar cell itself has flexibility, the flexibility of a solar cell module with power converters can be further enhanced.

According to the above item (VII), one wiring only needs to be separately provided for connecting outputs of power converters. Consequently, the rigidity caused by the wiring in a solar cell module with power converters can be reduced, and the flexibility of the solar cell module with power converters can be further enhanced. Furthermore, the number of wiring members can be reduced, which enables a reduction in cost.

According to the above item (VIII), since a solar cell can be formed by vapor deposition, a large-area solar cell module can be easily attained.

### BRIEF DESCRIPTION OF THE DRAWINGS

Fig. 1 is a schematic view showing a configuration of a solar cell module with power converters according to the present invention.
Fig. 2 is a view showing an arrangement position of the power converters according to the present invention.
Fig. 3 is a wiring diagram of the solar cell module with power converters according to the present invention.
Fig. 4 is a schematic view showing a solar cell module with DC-DC converters on an ETFE surface according to Example 1 of the present invention.
Fig. 5 is a view showing an arrangement position of the DC-DC converters placed in a solar cell module with power converters according to Example 1 of the present invention.
Fig. 6 is a view showing a stack configuration before lamination of a cross-section taken along the line 6-6 of Fig. 5 of the solar cell module according to Example 1 of the present invention.
Fig. 7 is a wiring diagram of the solar cell module with power converters according to Example 1 of the present invention.
Fig. 8 is a view showing a solar cell module before provision of power converters and a junction box in the solar cell module with DC-DC converters according to Example 1 of the present invention.
Figs. 9A, 9B and 9C show amorphous microcrystal stacked solar cells connected in parallel to each other according to Example 1 of the present invention.
Fig. 10 is an enlarged view of an installation portion of a DC-DC power converter portion placed in the solar cell module according to Example 1 of the present invention.
Fig. 11 is a circuit configuration diagram of the DC-DC converter according to Example 1 of the present invention.
Fig. 12 is an enlarged view of an installation portion of a junction box placed in the solar cell module with power converters according to Example 1 of the present invention.
Fig. 13 is a schematic view of a solar cell module having DC-DC converters on an ETFE surface according to Example 2 of the present invention.
Fig. 14 is a view showing an arrangement position of the DC-DC converters placed in the solar cell module with power converters according to Example 2 of the present invention.
Fig. 15 is a view showing a covering configuration before lamination of a cross-section taken along the line 15-15 of Fig. 14 of the solar cell module with power converters according to Example 2 of the present invention.
Fig. 16 is a wiring diagram of the solar cell module with power converters according to Example 2 of the present invention.
Fig. 17 is a view showing a solar cell module before provision of DC-DC converters and a junction box in the solar cell module with power converters according to Example 2 of the present invention.
Figs. 18A, 18B and 18C show amorphous microcrystal stacked solar cells connected in parallel to each other according to Example 2 of the present invention.
Fig. 19 is a circuit configuration diagram of a DC-DC converter according to Example 2 of the present invention.

### DESCRIPTION OF THE PREFERRED EMBODIMENTS

Hereinafter, embodiments of a solar cell module with power converters of the present invention will be described with reference to the drawings. The present invention is not limited to the embodiments.

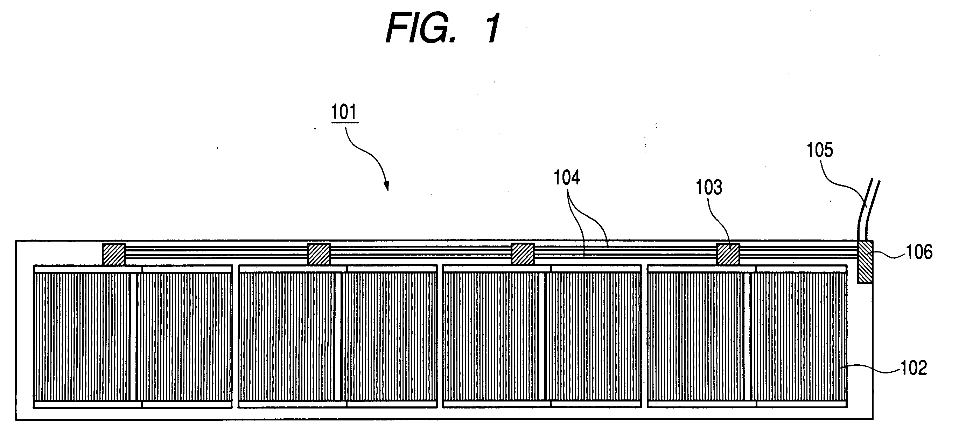

Fig. 1 is a schematic view showing a configuration of a solar cell module with power converters according to the present invention. Reference numeral 101 denotes a solar cell module with power converters; 102, a solar cell; 103, a power converter; 104, a parallel connecting line; 105, a solar cell module output line; and 106, a junction box.

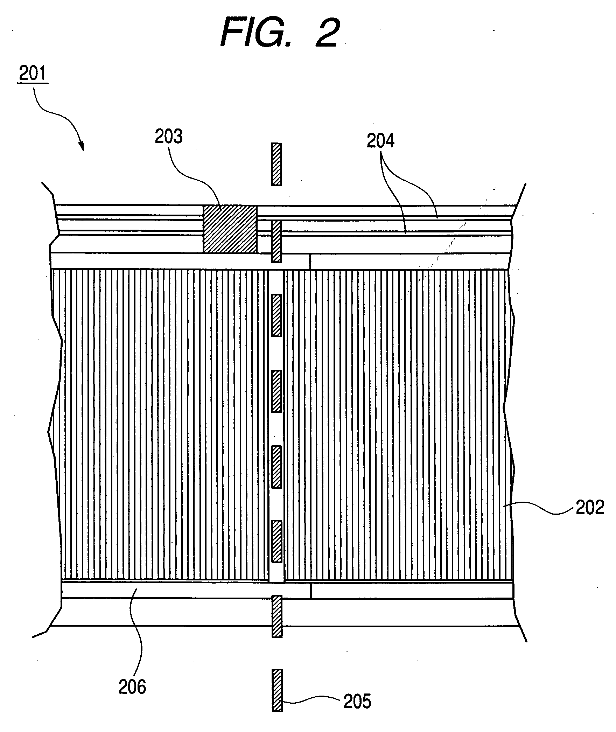

Fig. 2 shows an arrangement position of the power converters. Reference numeral 201 denotes a solar cell module with power converters; 202, a solar cell; 203, a power converter; 204, a parallel connecting line; 205, an extension line of a gap between solar cells; and 206, a terminal member.

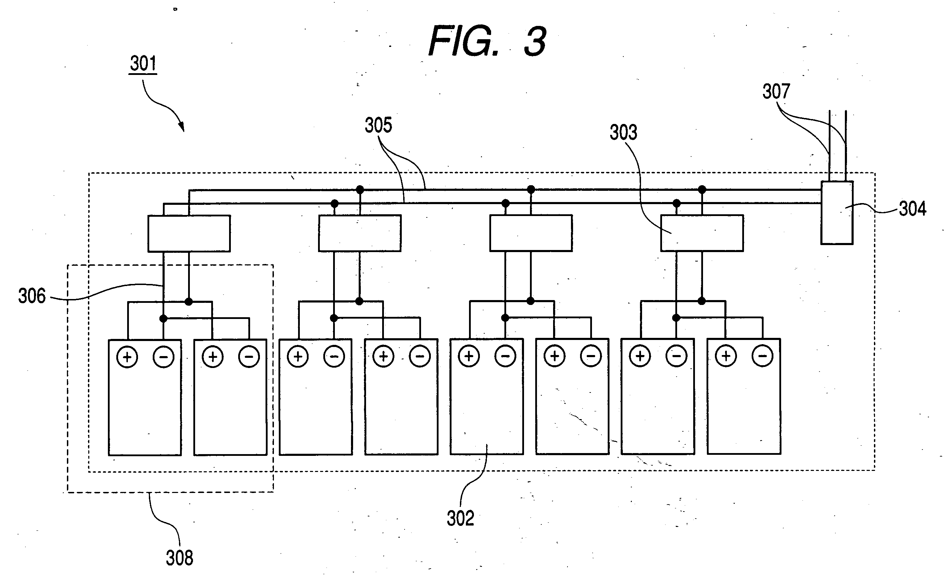

Fig. 3 is a wiring diagram of the solar cell module according to the present invention. Reference numeral 301 denotes a solar cell module with power converters; 302, a solar cell; 303, a power converter; 304, a junction box; 305, a parallel connecting line; 306, a solar cell output line; 307, a solar cell module output line; and 308, a solar cell group.

The solar cell module according to this embodiment is composed of a plurality of solar cells and a covering member, and a plurality of power converters are provided on the surface of the covering member. A plurality of solar cell groups are formed, each of which includes the two or more solar cells electrically connected to each other with a gap therebetween via an interconnector. The power converters are arranged out of the extension line of the gap, and each power converter is connected to an output of one solar cell group. The outputs of the respective power converters are connected in parallel. The power converters reduce a wiring loss by stepping up the output of the solar cell groups connected in parallel. The outputs of the respective power converters are connected by the parallel connecting line. The parallel connecting line is led out from the junction box provided at an end by the solar cell module output line.

In this embodiment, the power converters are provided so as not to position on the extension line of the gap between the solar cells; the solar cell is likely to be deformed by an external force if positioning on the extension line. Because of this, even if the solar cell module is applied with an external force, a bending stress is unlikely to act thereon. Therefore, the power converters are unlikely to be peeled from the surface of the solar cell module, which can substantially reduce the possibility of impairing watertightness and insulation.

Hereinafter, each portion will be described in detail.

### (Solar cell)

There is no particular limit to the kind of the solar cell in the present invention. Examples of the solar cell include an amorphous microcrystal silicon stacked solar cell, a crystalline silicon solar cell, a polycrystalline silicon solar cell, an amorphous silicon solar cell, a copper-indium selenide solar cell, and a compound semiconductor solar cell. However, a solar cell of a thin film type is preferable as it has flexibility. In particular, a solar cell in which a semiconductor active layer or the like as a light converting member is formed on a flexible conductive substrate is preferable, since the large-area solar cell is easily produced and the cell has high reliability with respect to a bending stress. A stacked solar cell having a three-layer structure of an amorphous microcrystal silicon type is particularly preferable.

### (Solar cell group)

The solar cell group has a configuration in which a plurality of solar cells connected to an input of one power converter are connected electrically to each other. The respective solar cells can also be electrically connected in series of 2 to 4 stages to such a degree as not to increase a cost, if required. However, parallel connection, which includes no series connection, is preferable in terms of a cost.

### (Covering member)

The covering member is used for the purpose of enhancing weather resistance of a solar cell such as protecting a solar cell from external soil and preventing the solar cell from being externally damaged. Thus, the covering member needs to have transparency, weather resistance, and soil resistance. Examples of a material that satisfies such a request and can be used preferably include fluororesin, acrylic resin, urethane resin, silicone resin, and glass. Examples of a covering method with these materials include a method of forming the materials to a film for lamination, a method of covering the solar cell with the materials by coating, and a method of attaching the materials with an adhesive. Depending upon the use, the covering member can be provided only on the surface of the solar cells, or on the front and back sides thereof.

### (Terminal member)

The terminal member is electrically connected to a collecting electrode of a solar cell to form a plus or minus lead electrode. The terminal member on a non-light-receiving surface side is attached to a conductive substrate or a back surface electrode of a solar cell by laser welding, conductive adhesive, soldering, or the like so as to have an electrically low resistance, and mechanical strength. The terminal member on a light-receiving surface side is attached to a collecting electrode by thermocompression bonding or the like with a conductive adhesive or the like. In this specification, depending upon the position of a solar cell to which the terminal member is attached, the terminal member is classified into a "light-receiving surface terminal member" and a "non-light-receiving surface terminal member".

The required electric performance, material, and the like for the terminal member are substantially the same as those of the collecting electrode. The shape of the terminal member is a foil-like shape that can keep flatness of a solar cell and enables a low resistance. Furthermore, the terminal member is connected to the power converter as follows. The input terminal of the power converter and the terminal member are connected via a lead wire, i.e., the lead wire is attached to the light-receiving surface terminal member or the non-light-receiving surface terminal member by laser welding, conductive adhesive, soldering, or the like, extending to the input terminal of the power converter to be connected thereto.

### (Parallel connecting line)

In order to constitute the solar cell module of this embodiment, the parallel connecting line for connecting in parallel all the outputs of the power converters connected to each solar cell group is required. The member for the connection corresponds to the parallel connecting line. In the solar cell of this embodiment, two parallel connecting lines are used. However, in the case where the conductive substrate is connected as one common line through a power source line, the number of members may be one. More specifically, as this member, a general-purpose insulated wire, an insulated cable, or the like may be used. More preferably, the parallel connecting line is buried in the covering member of the solar cell module. In this case, a bare conductor with no insulating sheath or the like maintains the flatness of the solar cell module, and the covering member can be set to be thin, which is preferable. As the bare conductor, a copper foil, a copper wire, a copper twisted wire, a copper bar, and the like are preferable.

### (Power converter)

The power converter includes a DC-DC converter for converting a DC output to a different voltage output, and an inverter for converting a DC output to an AC output. In the present invention, a DC-DC converter is preferable. This is because, in order to obtain an AC voltage for connection to a system, a capacitor with a large capacity is required, which is not suitable for miniaturization. The power converter is composed of a step-up circuit for stepping up a voltage, a control circuit for starting/stopping power conversion, optimizing an operating point of a solar cell, and controlling an operation mode and the like, a communication circuit, an input/output terminal, and the like. The output thereof may be directly connected to a load. It is preferable that outputs of a plurality of DC-DC converters are input to one inverter, and a converted AC power is used at a load or used for system interconnection.

As the step-up circuit, various known circuit configurations can be used irrespective of whether an insulation type or non-insulation type is used. The control circuit includes, for example, a CPU, a PWM waveform control circuit, an optimum power point tracking control circuit, a control power source generating circuit, a frequency/voltage reference generator, a switching control circuit, and the like. Furthermore, the control circuit may be operated in response to instructions from the outside via a communication line or the like. It is also possible that a partial function of the control circuit is attained outside the DC-DC converter, and a plurality of power converters are collectively controlled at a time.

However, the power converter in this embodiment is a DC-DC converter. It is preferable that, for the purpose of simplifying a configuration as much as possible, reducing a cost, and enhancing reliability, the control circuit includes at least a control power source generating circuit, a switching reference waveform generating circuit for defining a switching frequency, and a switching element driving circuit capable of driving a switching element at a fixed on/off duty ratio.

Furthermore, it is preferable that a main circuit includes a switching element that is turned on/off by the above-mentioned switching element driving circuit, and a switching transformer formed at a predetermined winding number ratio.

In a system in which a plurality of DC-DC converters for driving switching elements at the above-mentioned fixed on/off duty ratio are connected in parallel to each other, by changing an input voltage of an inverter in a subsequent stage, an input voltage of the DC-DC converter can be changed, whereby the operating point of a solar cell can be changed.

Furthermore, the DC-DC converter is formed into a single-chip IC, and electrically connected to a surface wiring member and a conductive substrate in the production process of a solar cell module, whereby a series of operations of connecting a DC-DC converter to a solar cell can be simplified.

Furthermore, in order to receive an output from a solar cell group efficiently, the DC-DC converter is desirably placed at a position where the total length of a plurality of wirings for connecting an output of each solar cell constituting a solar cell group to an input of a power converter is minimized so as to decrease a wiring loss.

Furthermore, it is necessary that an outer member of the DC-DC converter has performance such as heat resistance, moisture resistance, water resistance, electric insulation, cold-resistance, oil resistance, weather resistance, impact resistance, or water-proofing property depending upon the use conditions. Furthermore, in order to firmly fix the DC-DC converter to the covering member of solar cells, the outer member is preferably made of a material having good adhesion with an adhesive.

In view of the above-mentioned points, as the outer member, for example, plastics such as resin (e.g., polycarbonate, polyamide, polyacetal, modified PPO (PPE), polyester, polyarylate, unsaturated polyester, phenol resin, epoxy resin, polybutylene terephthalate, nylon, etc.), and engineering plastics can be used. Furthermore, thermo-plastics such as ABS resin, polypropylene, and polyvinyl chloride can also be used.

Furthermore, in order to enhance UV-light resistance, it is preferable that carbon black is used as a pigment, or the surface of the outer member is coated with resin coating that absorbs UV-light.

### (Solar cell output line)

The solar cell output line in the present invention is a wiring member connecting a solar cell to a power converter, and a bare conductor having no armor is preferable. This is because such a solar cell output line can be buried in a covering member, and with this arrangement, the covering member can be made thin. By using a bare conductor, electric connection can be performed at an arbitrary position, and hence, electric connection operability is satisfactorily high. Furthermore, the solar cell output line is not limited to a single-core or a multi-core. Furthermore, in the case where the solar cell output line is laminated in an integral manner with a solar cell, by using a thin copper foil having flexibility, a lamination failure can be suppressed.

### (Solar cell module output line)

The solar cell module output line in the present invention is a wiring member for taking electric power from the junction box to the outside of the solar cell module. In this wiring, a wiring covered with an insulating sheath is preferable in view of prevention of corrosion such as electrolytic corrosion. By using a covered wiring, various materials such as conductive ones can be used for a covering member and a fixing member. Furthermore, the solar cell module output line is not limited to a single-core or a multi-core. It is also possible that a single-core wiring is used so that one electric output line extends to the outside of the solar cell module.

Furthermore, it is preferable that a connector member is provided in a cable. In the case where the length of an electric output line required for setting a solar cell module and performing electric connection is known, when a connector member is provided, an electric connection operation can be performed more efficiently.

### (Junction box)

The junction box in the present invention is a box for electrically connecting the parallel connecting line to the solar cell module output line so as to take power generated in a solar cell to the outside, and imparting to the electric connection portion thereof, weather resistance. For example, a frame is provided so as to surround the electric connection portion, and a filler is charged therein to achieve insulation. If the filler has adhesion with respect to the covering member of the solar cell module, the filler can also serve as an adhesive for fixing the junction box. Furthermore, in the case where the filler has weather resistance, it is not necessary to provide a cover, so that the cost can be reduced accordingly.

Hereinafter, the present invention will be described in detail based on examples. The present invention is not limited to the examples.

### (Example 1)

This example is directed to a solar cell module which has a plurality of stacked solar cells including an amorphous microcrystal silicon type three-layer structure, covered with a covering member composed of an ethylene-tetrafluoroethylene copolymer (ETFE), an ethylene-vinyl acetate copolymer (EVA), and polyethylene terephthalate (PET), and has DC-DC converters provided on an ETFE surface.

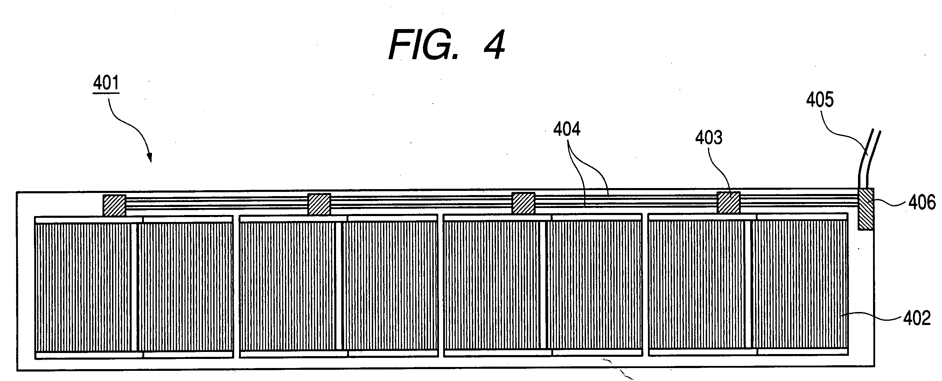

Fig. 4 is a schematic view of a solar cell module having DC-DC converters on an ETFE surface according to this example. Reference numeral 401 denotes a solar cell module with DC-DC converters; 402, amorphous microcrystal stacked solar cells; 403, DC-DC power converters; 404, a parallel connecting line; 405, a solar cell module output line; and 406, a junction box.

Since the amorphous microcrystal stacked solar cells have flexibility, the entire solar cell'module can be formed as a flexible module.

Each DC-DC converter 403 is connected to an output of a solar cell group in which two solar cells are connected in parallel to each other. The output of each DC-DC converter is connected to the parallel connecting line 404, and is input to the junction box 406. The solar cell module output line 405 is led from the junction box 406.

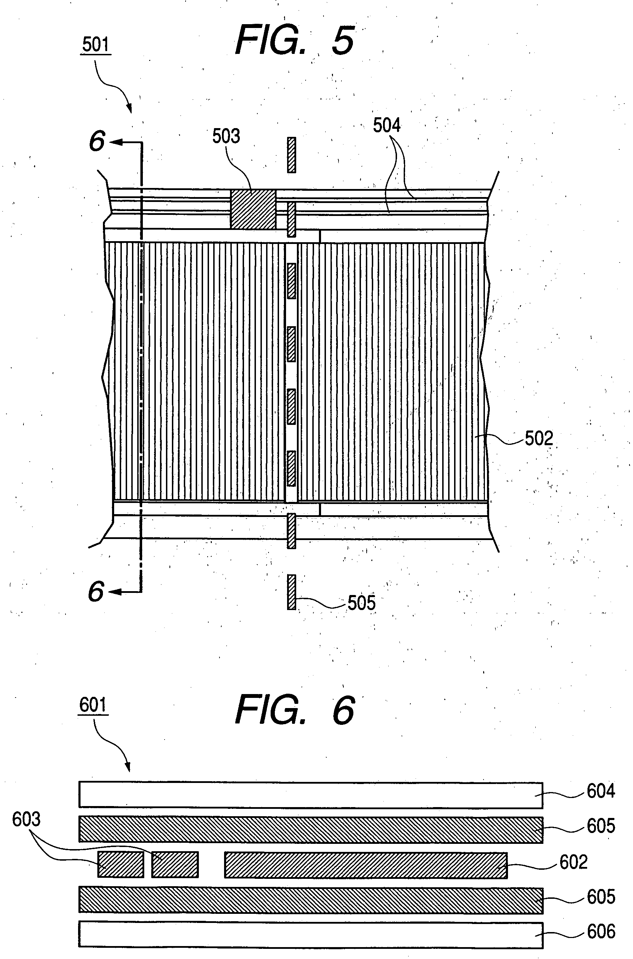

Fig. 5 shows an arrangement position of the DC-DC converters arranged in the solar cell module with power converters according to this example. Reference numeral 501 denotes a solar cell module with power converters; 502, amorphous microcrystal stacked solar cells; 503, DC-DC power converters; 504, a parallel connecting line; and 505, an extension line of a gap between the solar cells. The portion out of the extension line is unlikely to deform even in the case where an external force is applied to the solar cell module with power converters. Therefore, watertightness and insulation can be kept between the DC-DC converters and the surface of the solar cell module.

Fig. 6 shows a stack configuration before lamination of a cross-section taken along the line 6-6 of Fig. 5 of the solar cell module according to this example. Reference numeral 601 denotes a solar cell module with power converters; 602, amorphous microcrystal stacked solar cells; 603, a parallel connecting line; 604, an ETFE; 605, an EVA; and 606, a PET.

The parallel connecting line 603 is made of a copper foil, and is sealed with an EVA that is a covering member together with the solar cells 602, so that insulation and weather resistance can be achieved. Furthermore, since a connecting wiring between the DC-DC converters does not extend to the outside of the solar cell module, the solar cell module can be rolled easily without hooking, which can substantially reduce the possibility of disconnection during its operation.

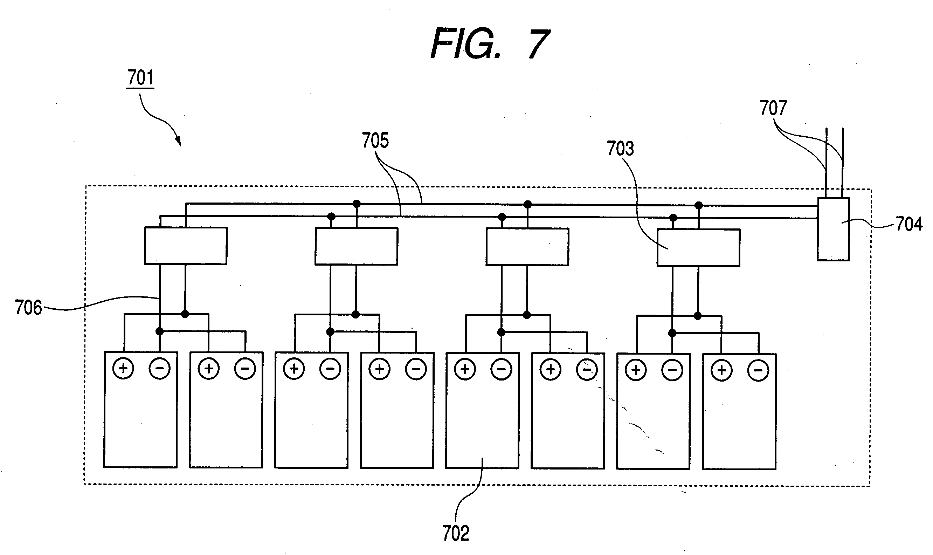

Fig. 7 is a wiring diagram of the solar cell module with power converters according to this example. Reference numeral 701 denotes a solar cell module with power converters; 702, amorphous microcrystal stacked solar cells; 703, power converters; 704, a junction box; 705, a parallel connecting line; 706, a solar cell output line; and 707, a solar cell module output line.

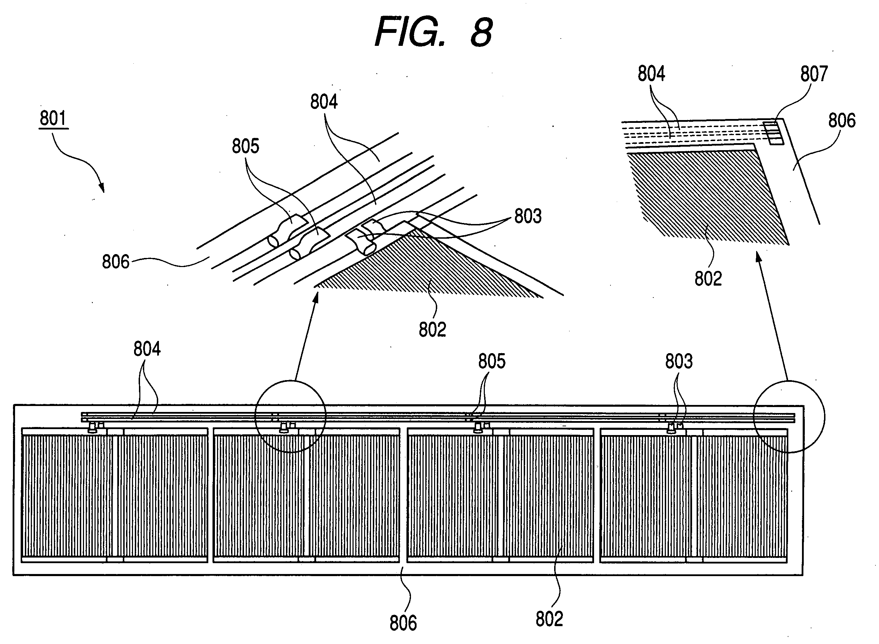

Fig. 8 shows a solar cell module before provision of power converters and a junction box in the solar cell module with power converters according to this example. Reference numeral 801 denotes a solar cell module with power converters; 802, amorphous microcrystal stacked solar cells; 803, a solar cell output line; 804, a parallel connecting line; 805, a branch line from the parallel connecting line; 806, a covering member; and 807, openings of a light-receiving surface side covering member. A part of each wiring member is taken out to the surface of the covering member, and the surface is made of ETFE. Therefore, even if lamination is performed with a wiring member led out from the covering member, the surface does not bond to the wiring member, which can enhance electric connection operability.

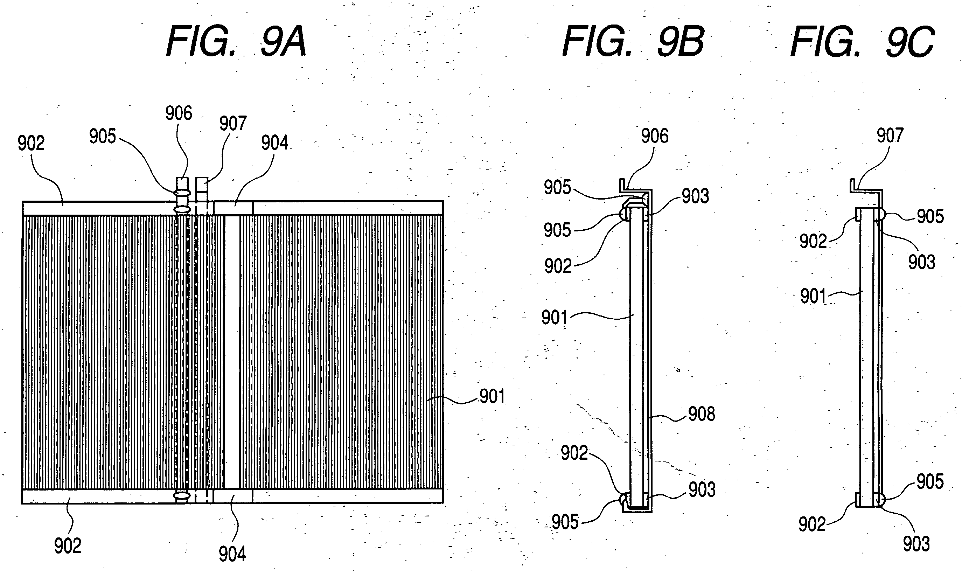

Figs. 9A to 9C show amorphous microcrystal stacked solar cells connected in parallel to each other according to this example. Fig. 9A is a top view thereof. Fig. 9B is a cross-sectional side view of a positive electrode output line arrangement portion of the solar cell. Fig. 9C is a cross-sectional side view of a negative electrode output line arrangement portion of the solar cell. The left side in the figure represents the surface (light-receiving surface). Reference numeral 901 denotes a solar cell; 902, a solar cell positive electrode terminal member; 903, a solar cell negative electrode terminal member; 904, an interconnector; 905, a soldering portion; 906, a solar cell positive electrode output line; 907, a solar cell'negative electrode output line; and 908, a PET insulating tape.

The positive electrode terminal member 902 and the negative electrode terminal member 903 of the solar cell are arranged at both ends on a short side. Therefore, those members are led out by using the solar cell positive electrode output line 906 and the solar cell negative electrode output line 907 that are made of a copper foil. The insulating tape 908 is applied between the solar cell positive electrode output line 906 and the solar cell back surface, which prevents a short-circuit. The solar cells are connected in parallel to each other by the interconnector 904. The terminal members 902 and 903 of the solar cell are connected to the solar cell output lines 906 and 907 made of a copper foil by soldering.

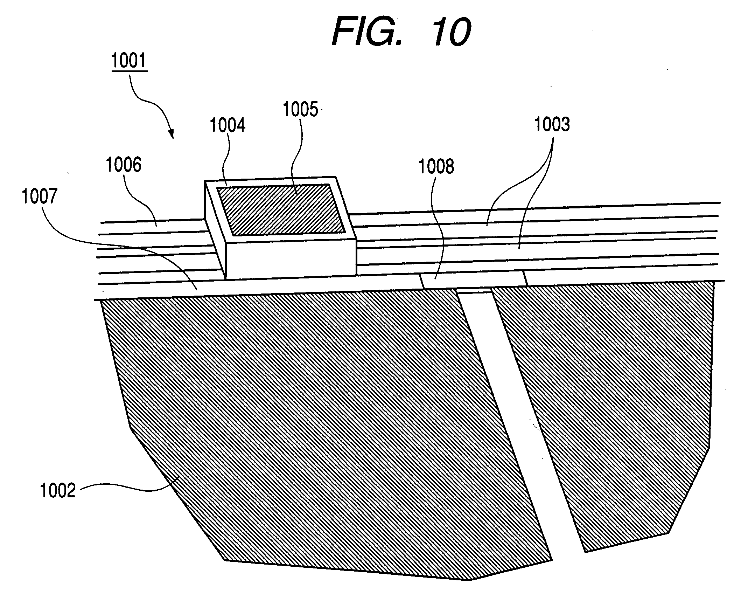

Fig. 10 is an enlarged view of an installation portion of a DC-DC power converter placed in the solar cell module according to this example. Reference numeral 1001 denotes a solar cell module with power converters; 1002, an amorphous microcrystal stacked solar cell; 1003, a parallel connecting line; 1004, a frame for the DC-DC power converter; 1005, a filler for the DC-DC power converter; 1006, a covering member; 1007, a solar cell positive electrode terminal member; and 1008, an interconnector.

The DC-DC converter is placed adjacent to a gap between two solar cells connected in parallel, out of an extension line of the gap between the solar cells in a region outside a light-incident effective area of the solar cells. This is because the converter arranged in such a portion supposedly involves a smaller wiring loss between the solar cell and the power converter, next to that on the extension line of the gap.

In this example, a printed substrate on which a DC-DC converter circuit is formed is electrically connected to an output line from solar cells and a branch line from the parallel connecting line. Thereafter, a frame is provided, and a silicone filler is charged therein to be cured. The silicone filler has weather resistance, which makes it possible to dispense with the cover.

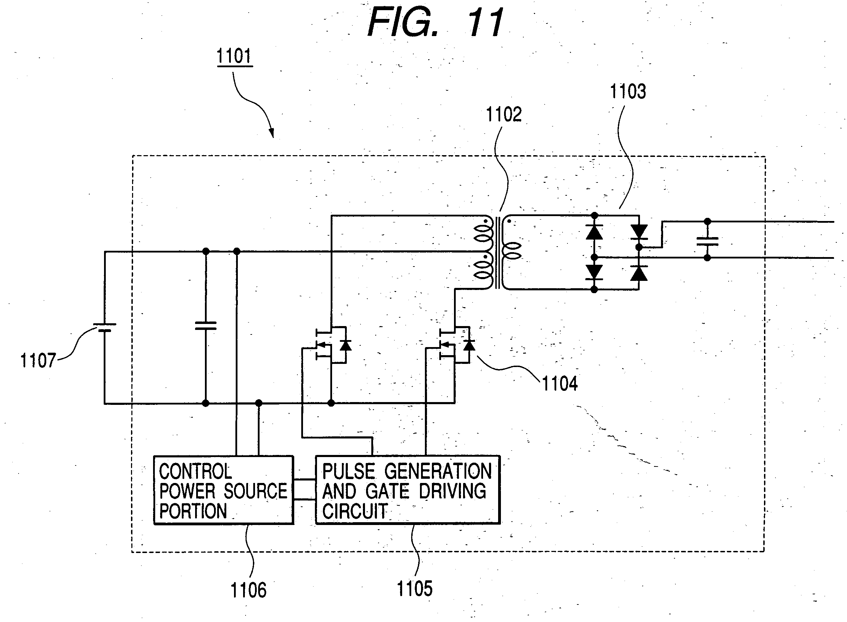

Fig. 11 is a circuit configuration diagram of the DC-DC converter suitably used for this example. Reference numeral 1101 denotes a DC-DC converter; 1102, a transformer; 1103, a rectifying circuit; 1104, a switching element; 1105, a pulse generation and gate driving circuit; 1106, a control power source portion; and 1107, an amorphous microcrystal stacked solar cell.

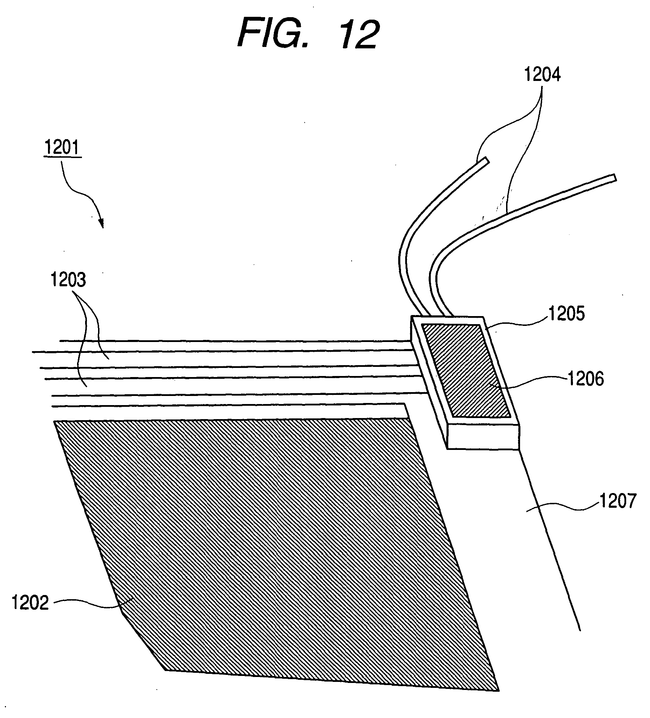

Fig. 12 is an enlarged view of an installation portion of a junction box placed in a solar cell module with power converters according to this example. Reference numeral 1201 denotes a solar cell module with power converters; 1202, a solar cell; 1203, a parallel connecting line; 1204, a solar cell module output line; 1205, a frame of the junction box; 1206, a filler for the junction box; and 1207, a covering member. The junction box is provided on a light-receiving surface side end portion of the solar cell module with power converters, and has an insertion port through which the solar cell module output line 1204 is inserted. The frame 1205 is placed at a predetermined position on an ETFE surface, and the solar cell module output line 1204 is electrically connected to the parallel connecting line 1203. Thereafter, the silicone filler 1206 is charged thereinto. The silicon filler has weather resistance, which makes it possible to dispense with the cover.

Consequently, a highly flexible solar cell module with power converters can be provided at a low cost.

### (Example 2)

This example is directed to a plurality of stacked solar cells having an amorphous microcrystal silicone type three-layer structure covered with a covering member made of ETFE, EVA, and PET, and a solar cell module with power converters including DC-DC converters provided on the ETFE surface. The solar cell module with power converters in this example has a configuration in which an earth line of a DC-DC converter is combined with a negative electrode of a solar cell.

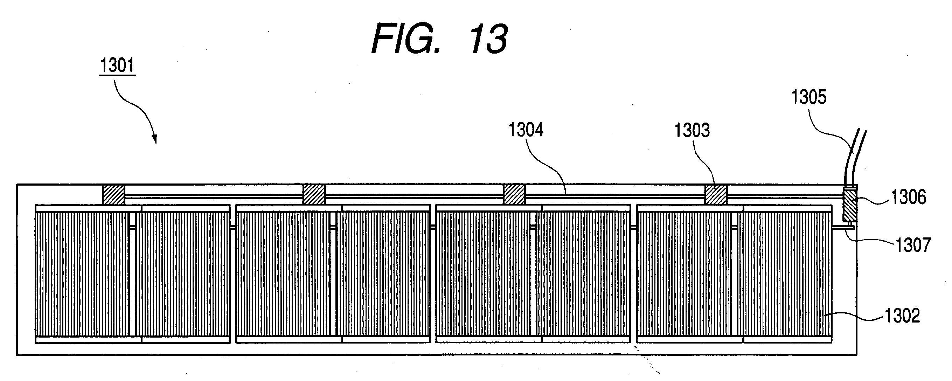

Fig. 13 is a schematic view of a solar cell module having DC-DC converters on the ETFE surface according to this example. Reference numeral 1301, a solar cell module with power converters; 1302, an amorphous microcrystal stacked solar cell; 1303, a DC-DC converter; 1304, a parallel connecting line; 1305, a solar cell module output line; 1306, a junction box; and 1307, an earth line.

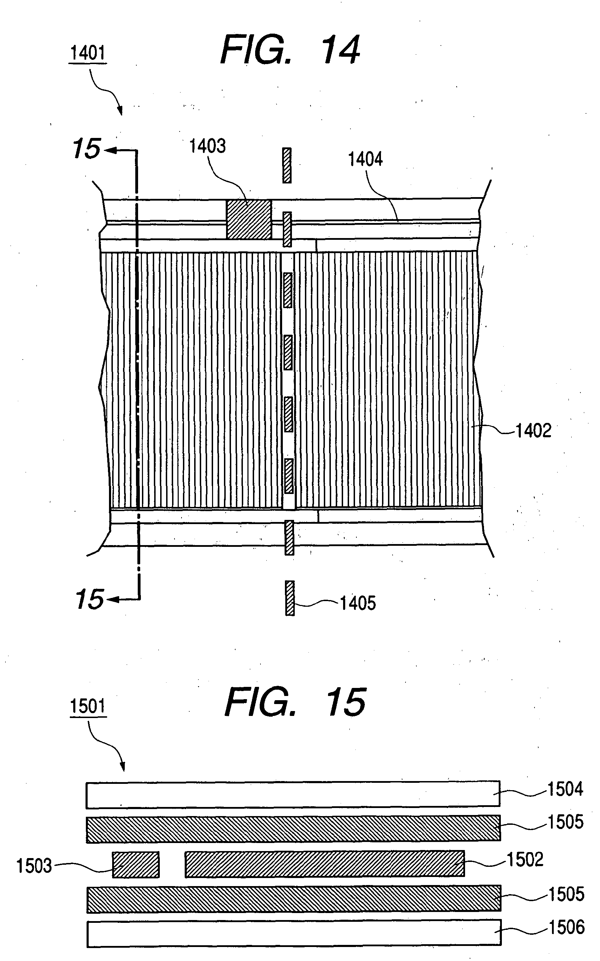

Fig. 14 shows an arrangement position of DC-DC converters placed in the solar cell module with power converters according to this example. Reference numeral 1401 denotes a solar cell module with power converters; 1402, an amorphous microcrystal stacked solar cell; 1403, a DC-DC converter; 1404, a parallel connecting line; and 1405, an extension line of a gap between solar cells. A portion out of the extension line is unlikely to deform even when the solar cell module with power converters is applied with an external force. Therefore, watertightness and insulation can be kept easily between the DC-DC converters and the surface of the solar cell module.

Fig. 15 is a view showing a covering configuration before lamination of a cross-section taken along the line 15-15 of Fig. 14 of the solar cell module with power converters according to this example. Reference numeral 1501 denotes a solar cell module with power converters; 1502, an amorphous microcrystal stacked solar cell; 1503, a parallel connecting line; 1504, an ETFE; 1505, an EVA; and 1506, a PET.

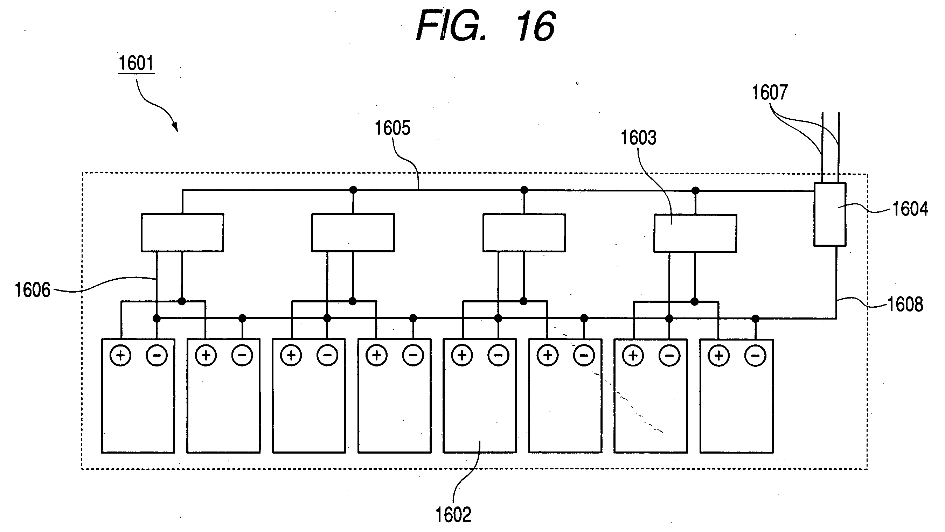

Fig. 16 is a wiring diagram of a solar cell module with power converters according to this example. Reference numeral 1601 denotes a solar cell module with power converters; 1602, an amorphous microcrystal stacked solar cell; 1603, a DC-DC converter; 1604, a junction box; 1605, a parallel connecting line; 1606, a solar cell output line; 1607, a solar cell module output line; and 1608, an earth line.

The solar cell output line 1606 of the solar cells connected in parallel is connected to the DC-DC converters 1603. The output stepped up by the DC-DC converters is input to the junction box 1604 through the parallel connecting line 1605 and the earth line 1608, and is taken to the outside via the solar cell module output line 1607.

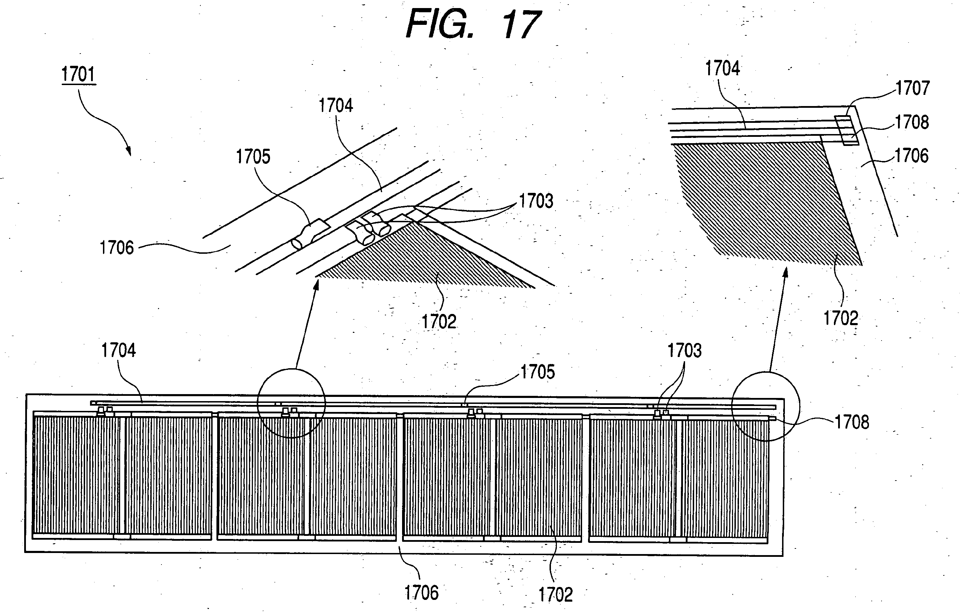

Fig. 17 is a view showing a solar cell module before provision of the DC-DC converters and the junction box, in the solar cell module with power converters according to this example. Reference numeral 1701 denotes a solar cell module with power converters; 1702, an amorphous microcrystal stacked solar cell; 1703, a solar cell output line; 1704, a parallel connecting line; 1705, a branch line from the parallel connecting line; 1706, a covering member; 1707, an opening of light-receiving surface side covering members; and 1708, an earth line.

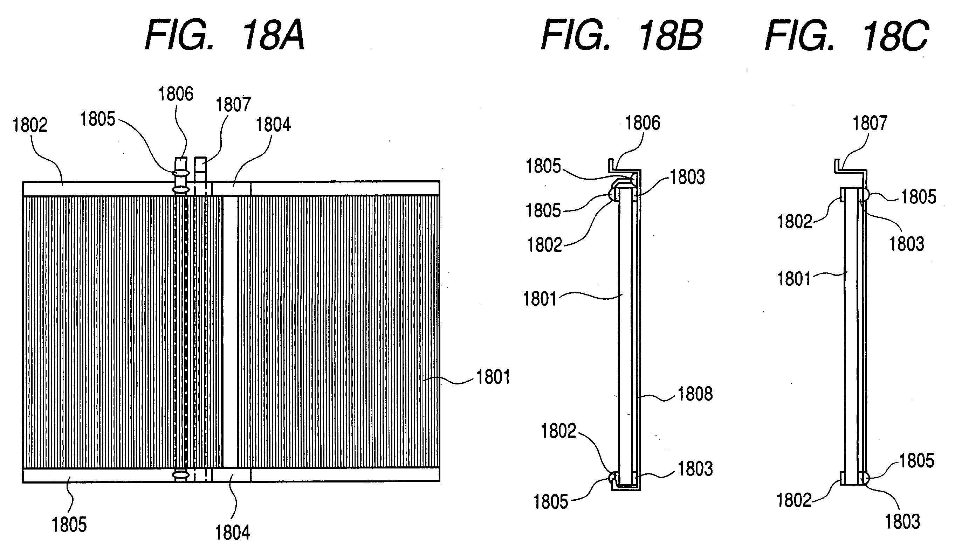

Figs. 18A to 18C are views showing amorphous microcrystal stacked solar cells connected in parallel to each other according to this example. Fig. 18A is a top view thereof. Fig. 18B is a cross-sectional side view of a positive electrode output line arrangement portion of a solar cell. Fig. 18C is a cross-sectional side view of a negative electrode output line arrangement portion of a solar cell. The left side in the figure represents a surface (light-receiving surface). Reference numeral 1801 denotes a solar cell; 1802, a solar cell positive electrode terminal member; 1803, a solar cell negative electrode terminal member; 1804, an interconnector; 1805, a soldering portion; 1806, a solar cell positive electrode output line; 1807, a solar cell negative electrode output line; and 1808, an insulating tape. An output of every two solar cells connected in parallel is connected to a DC-DC converter, and a negative electrode of a solar cell is used as an earth line of the DC-DC converter. Therefore, all the negative electrodes of the solar cells in the solar cell module with power converters are only electrically connected via an interconnector.

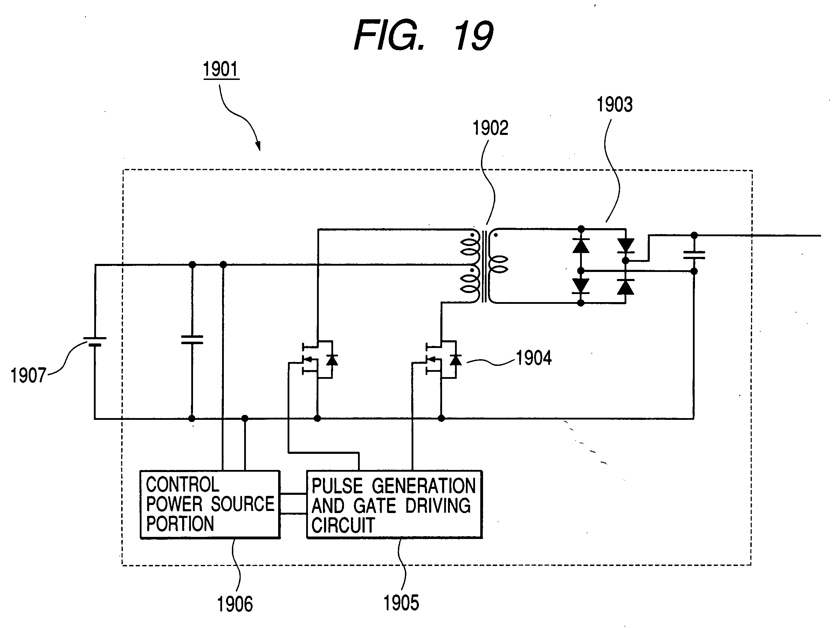

Fig. 19 is a circuit configuration diagram of DC-DC converters suitably used for this example. Reference numeral 1901 denotes a DC-DC converter; 1902, a transformer; 1903, a rectifying circuit; 1904, a switching element; 1905, a pulse generation and gate driving circuit; 1906, a control power source portion; and 1907, an amorphous microcrystal stacked solar cell. The earth line of the DC-DC converter is combined with a negative electrode of a solar cell. Therefore, the earth line passing through the rectifying circuit is connected to the solar cell negative electrode output line.

According to this example, all the negative electrodes of the solar cells are connected via an interconnector, whereby an output electric wiring path of one electrode of a power converter is formed in the order of: interconnector - negative electrode of a solar cell - interconnector. Therefore, only one parallel connecting line is sufficient for connecting power converters in parallel to each other and taking an output therefrom, and the number of requisite wiring members of the parallel connecting line can be reduced compared with Example 1. In addition, since there is only one parallel connecting line, the rigidity of the solar cell module with power converters is lowered to enhance flexibility. Furthermore, since only one parallel connecting line suffices therefor, the number of electrodes connected to the parallel connecting line of the DC-DC converters also can be reduced, which can realize miniaturization. Along with this, the installation area of the DC-DC converters in the solar cell module with power converters can be minimized, which can further enhance flexibility.

As described above, in the solar cell module with power converters according to the present invention, the power converter is not provided on an extension line of a gap between the solar cells where a bending stress is concentrated, and is placed in a portion out of the extension line. Consequently, the bending stress generated when the solar cell module with power converters is rolled can be absorbed in the gap. Furthermore, the number of power converters per module can be reduced. Therefore, the ratio at which power converters, to which a bending stress should not be applied, occupy the solar cell module with power converters drops. Consequently, the power converters are hardly applied with a bending stress when the solar cell module is rolled, whereby the flexibility of the solar cell module with power converters can be enhanced.

Provided is a solar cell module with power converters, including a plurality of solar cells, a covering member, and a plurality of power converters provided on a surface of the covering member, in which the solar cells form a plurality of solar cell groups comprising two or more solar cells electrically connected to each other with a gap therebetween via an interconnector, each of the power converters is arranged out of an extension line of the gap, each power converter is connected to an output of one solar cell group, and outputs of the respective power converters are all connected in parallel to each other.

## Claims

1. A solar cell module with power converters, comprising:
a plurality of solar cells;
a covering member; and
a plurality of power converters provided on a surface of the covering member,
wherein the solar cells form a plurality of solar cell groups comprising two or more solar cells electrically connected to each other with a gap therebetween via an interconnector;
each of the power converters is arranged out of an extension line of the gap;
each power converter is connected to an output of one solar cell group; and
outputs of the respective power converters are all connected in parallel to each other.

2. The solar cell module with power converters according to claim 1, wherein the plurality of power converters are DC-DC converters that step up a DC voltage output from the solar cells.

3. The solar cell module with power converters according to claim 1, wherein a wiring member electrically connecting the outputs of the plurality of power converters is buried in the covering member of the solar cell module.

4. The solar cell module with power converters according to claim 1, wherein the plurality of power converters are placed on a light-incident surface side of the covering member of the solar cell module.

5. The solar cell module with power converters according to claim 1, wherein the plurality of power converters are placed on a surface of the covering member outside light-incident surfaces of the solar cells, and placed at a position where a total length of a plurality of wirings connecting inputs of the power converters to the outputs of the solar cell groups is shortest.

6. The solar cell module with power converters according to claim 1, wherein the solar cells have flexibility.

7. The solar cell module with power converters according to claim 1, wherein one electrodes of the solar cells are all connected to form one power source line of the power converters.

8. The solar cell module with power converters according to claim 1, wherein the solar cells comprise stacked solar cells having an amorphous microcrystal silicon type three-layer structure.
